# EUROPEAN PATENT SPECIFICATION

(11) **EP 1 148 970 B1**
(45) Date of publication and mention of the grant of the patent: **09.04.2008**
(21) Application number: 00900281.7
(22) Date of filing: 13.01.2000
(51) Int. Cl.: B23K 37/053

(54) **WELDING MACHINE**
SCHWEISSMASCHINE
SOUDEUSE

(30) Priority: 13.01.1999 GB 9900600
(43) Date of publication of application: 31.10.2001
(73) Proprietor: Rohrleitungsbau Münster GmbH & Co. KG, Münster 48151 (DE)
(72) Inventor: POWER, Leslie, Ernest, Tettenhall Wolverhampton WV6 8ST (GB); TAYLOR, Reginald, Wednesfield Wolverhampton WV11 3PX (GB); BRENNAN, Michael, Anthony, Meadow Fields Northampton NN3 NTA (GB)
(74) Representative: Hübsch, Dirk
(86) International application number: PCT/GB2000/000084
(87) International publication number: WO 2000/041845

(56) References cited:
- EP-A- 0 624 425
- EP-A- 0 842 726
- US-A- 4 306 134

## Description

The present invention relates to internal pipe welding machines,

US Patent No.4306134 discloses an arc welding pipe apparatus according to the preamble of claim 1, which allows the torch assemblies to adjust the torch position angularly and radially.

According to the present invention there is defined an internal pipe welding machine including at least one welder assembly rotatable relative to a chassis of the internal pipe welding machine for welding a joint between a pipeline and a pipe, characterised in that the internal pipe welding machine includes a rotary gas distributor having a rotary member for rotation with the/or each welder assembly and a hub which is stationary relative to the chassis, an arcuate gas distribution groove being positioned in one of the rotary member and hub and being in gas communication with a gas passage in the hub and in gas communication with at least one gas passage in the rotary member, the gas passages and the groove acting to provide gas to the welder assembly during welding.

The invention will now be described by way of example only with reference to the accompanying drawings in which:-
Figures 1 to 5 are successive composite cross-sectional views of an internal pipe welding machine according to the present invention;
Figures 6-8, 10, 15 and 17-21 show enlarged views of various components as shown in Figure 2;
Figure 9 is a view on arrow A3 of figure 8;
Figure 11 is a view on arrow B3 of figure 3 showing a clamp shaft;

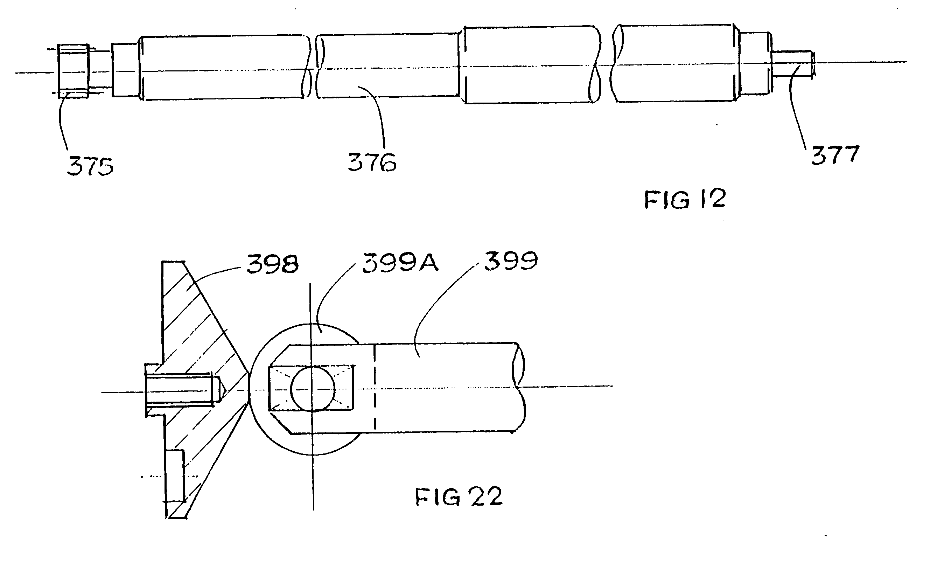

Figure 12 is a view similar to figure 1 showing shaft 376;
Figures 13 and 13A are developed views taken in the direction of arrow C3 of figure 3;

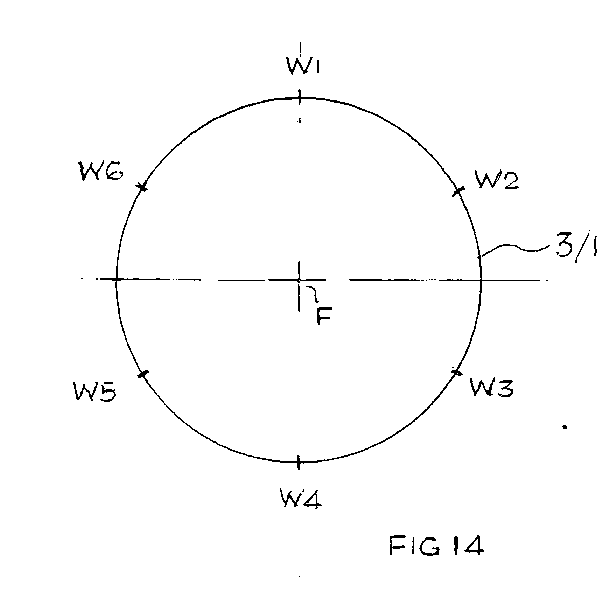

Figure 14 is a schematic view of the arrangement of the roller assemblies when viewed from the front of the welding machine;
Figure 16 is an axial view taken from the rear of the machine of the front clamp support 324B, also shown for convenience is the arrester rod guide lug 418A which is only present on rear clamp support 324A;
Figure 22 is a radial view of rod 399 and associated components

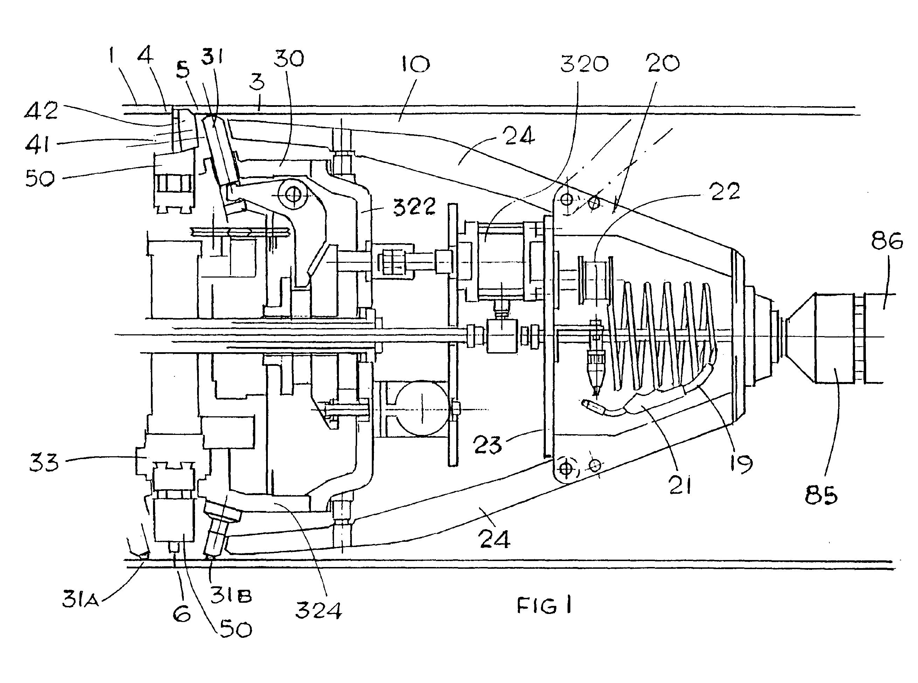

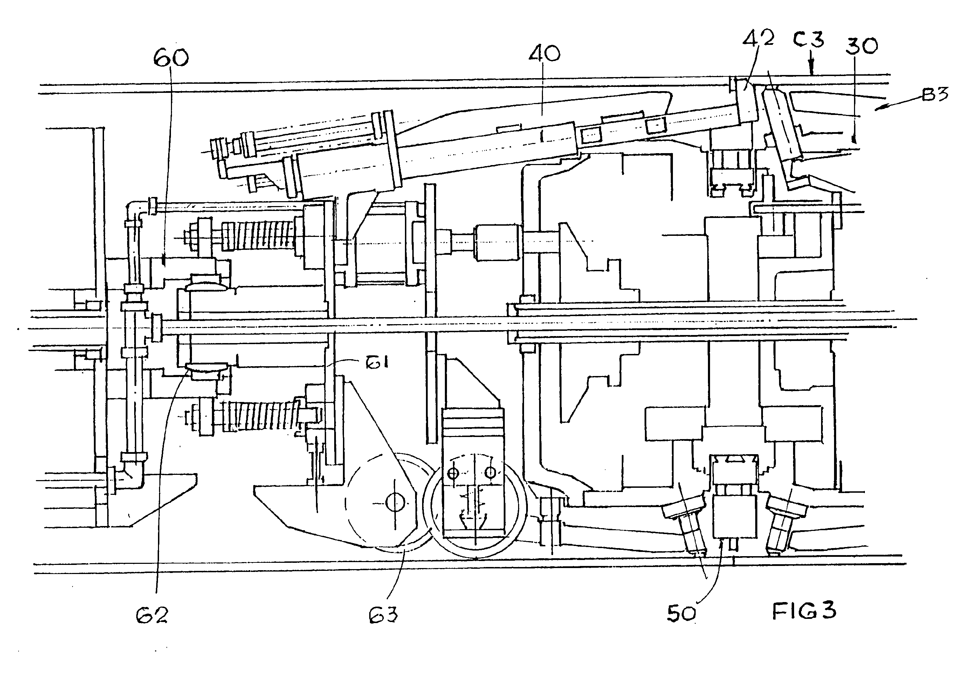

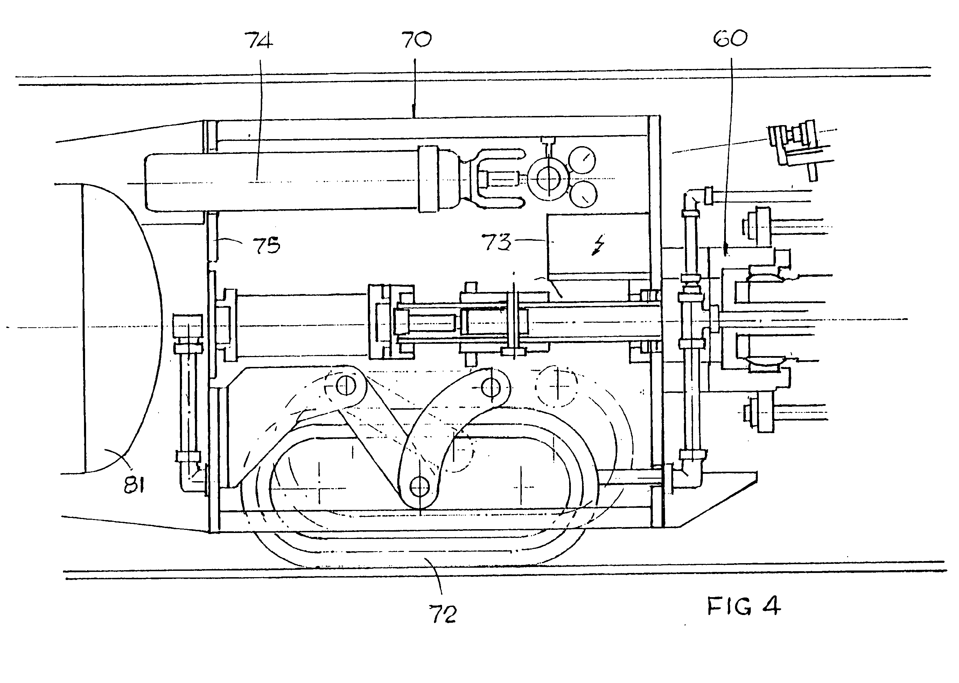

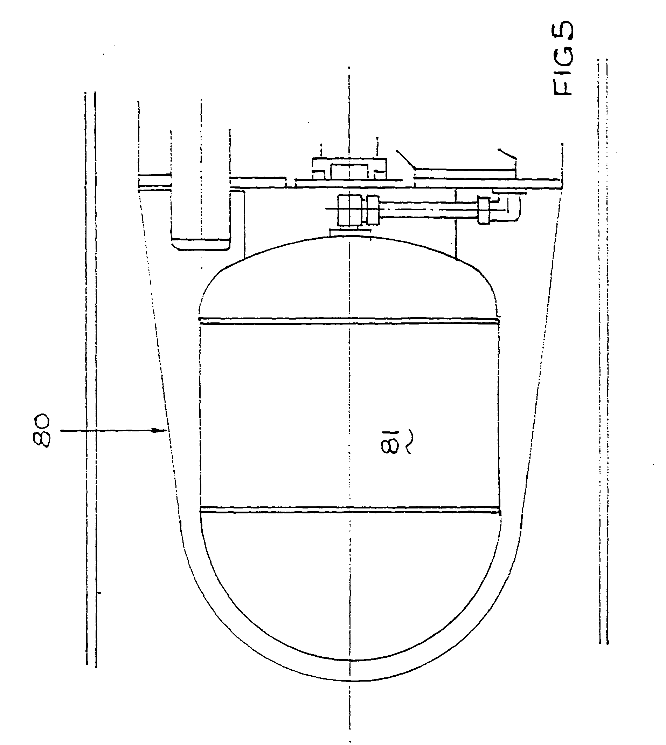

With reference to figures 1-5 there is shown an internal pipe welding machine 10 positioned within a pipeline 1. The pipeline 1 comprises a series of pipes each of which have been welded together to ensure a fluid tight pipeline.

The internal pipe welding machine 10 enables the joint 6 between the end 4 of pipeline 1 and end 5 of adjacent pipe 3 to be welded from the inside. Additionally the joint 6 can be welded from the outside by the use of a separate external pipe welding machine.

The internal pipe welding machine 10 comprises the following major components:-
a) Nose cone assembly 20
b) Thruster assembly 30
c) A plurality of arrester assemblies 40
d) A plurality of automatic welder assemblies 50
e) An articulated joint assembly 60
f) A drive assembly 70
g) An air receiver 80
h) A command rod coupling 85, and
i) A chassis 11

The nose cone assembly 20 includes a manual welder 19 including a welding torch 21 along with a spool of welding wire 22. The nose cone assembly 20 includes a plate 23 to which the thruster assembly 30 is connected. The nose cone assembly also includes a plurality of circumferentially equispaced pivotal guide arms 24 (in this case six) which are also connected to the thruster assembly 30.

Thruster assembly 30 includes a plurality of circumferentially equispaced pipe engaging clamps 31, a pair of guide wheels 32 and a rotatable ring member 33.

Mounted on ring member 33 is a plurality (in this case six) of circumferentially equispaced automatic welder assemblies 50.

A plate 61 of articulated joint assembly 60 is attached to the back of the thruster assembly 40. Attached to plate 61 is a plurality (in this case three) of circumferentially equispaced arrester assemblies 40. Each arrester assembly 40 includes an extendable shaft 41 with a positioning abutment 42 at one end.

The articulated joint assembly 60 allows the front subframe 12 of chassis 11 to articulate relative to the rear subframe 13 of chassis 11 and includes an articulated joint 62 and a plurality (in this case two) of loading wheels 63.

A plate 71 of the drive assembly 70 is attached to the back of the articulated joint assembly 60.

Drive assembly 70 includes a plurality (in this case three) of circumferentially equispaced track laying arrangements 72. Drive assembly 70 also includes 2 batteries 73 and a tank 74 of inert welding shield gas. A plate 75 of the drive assembly 70 is connected to the air receiver assembly 80.

The air receiver assembly 80 includes an air receiver tank 81.

At the front of the nose cone assembly 20 there is positioned a command rod rear coupling 85 which is releasably connected to a command rod 86. Command rod 86 is of a length such that it projects beyond the end of pipe 3 and includes at that end a command rod control panel (not shown) which can be used to control various functions of the machine and a command rod front coupling (not shown) which releasably connects the command rod to a supply of services eg. compressed air, battery charging current and welding current generators. Control signals pass down the command rod, to the machine, along with service supplies such as compressed air, welding current, and welding shield gas.

Once the internal pipe welding machine has completed a weld sequence, continued operation of the machine is as follows:-
1) An operator standing at the open end of the pipeline, ie. at the open end of the pipe that has newly been welded into place, adjacent the command rod control panel disconnects the command rod front coupling from the services and then operates the panel so as to retract the clamps and then start the air motors which in turn drive each track drive 72 so as to advance the machine along the pipeline 1 with the front subframe 12 being carried on guide wheels 32. The air motors are supplied by pressurised air from the air receiver tank 81.
   The machine is advanced, pushing the control rod before it, the control rod being fed into the next pipe to be welded which has previously been located proximate the end of the pipeline. A wall proximity sensor (not shown) moulded on the machine engages the inner wall of the pipe. When the nose cone assembly 20 projects from the open end of the pipeline 1 to such an extent that the proximity sensor no longer engages the wall, the machine is automatically stopped.
2) The operator further advances the machine by operating a machine control panel (not shown), situated within the nose cone assembly and accessible to the operator, such that the automatic welder assemblies 50 project beyond the open end of the pipeline.
3) The extendable shaft 41 of each arrester assembly 40 is then extended and rotated such that the positioning abutment 42 is axially aligned with a weld plane of the welder assemblies 50 and radially aligned with the end of the pipeline.
4) The operator then reverses the machine until the positioning abutments 42 contact the pipeline and prevent further rearward movement of the machine. At this position the weld plane of the automatic welder assemblies are now aligned with the end of the pipeline (see fig 1).
5) The rearmost pipe-engaging clamps 31A are then deployed to clamp the machine securely relative to the pipeline.
6) Each positioning abutment 42 is then rotated about the axis of the extendable shaft 41, and the extendable shaft is then withdrawn such that each positioning abutment lies between two adjacent rear pipe-engaging clamps 31A, clear of the path of the automatic welder assemblies (see below).
7) The section of pipe is then moved such that its end to be welded abuts the end 4 of the pipeline.
8) The operator then deploys the front pipe-engaging clamps 31B by using the command rod control panel.
9) At some convenient time following stage 1) above of the operation of the machine, and prior to welding (see below) the control rod front coupling is reconnected to the supply of services and the air receiver tank 81 can be re-pressurized if necessary.
10) Welding of the joint 6 between the pipe 3 pipeline 1 then occurs in two stages:
   Firstly the automatic welder assemblies positioned at 12 o'clock, 2 o'clock and 4 o'clock (when viewing from the front of the machine) weld the joint 6 whilst the ring member 33 rotates clockwise by approximately 60 degrees to weld one half of the joint 6. It should be noted that the automatic welder assemblies originally positioned at 6 o'clock, 8 o'clock and 10 o'clock are now positioned at 8 o'clock, 10 o'clock and 12 o'clock respectively. These latter automatic welder assemblies are then operated whilst the ring member is rotated sixty degrees anti-clockwise to weld the remaining half of the joint 6.
11) The operator then unclamps the front and rear pipe-engaging clamps via the command rod control panel and the machine can be advanced further along the pipeline to the next weld position.

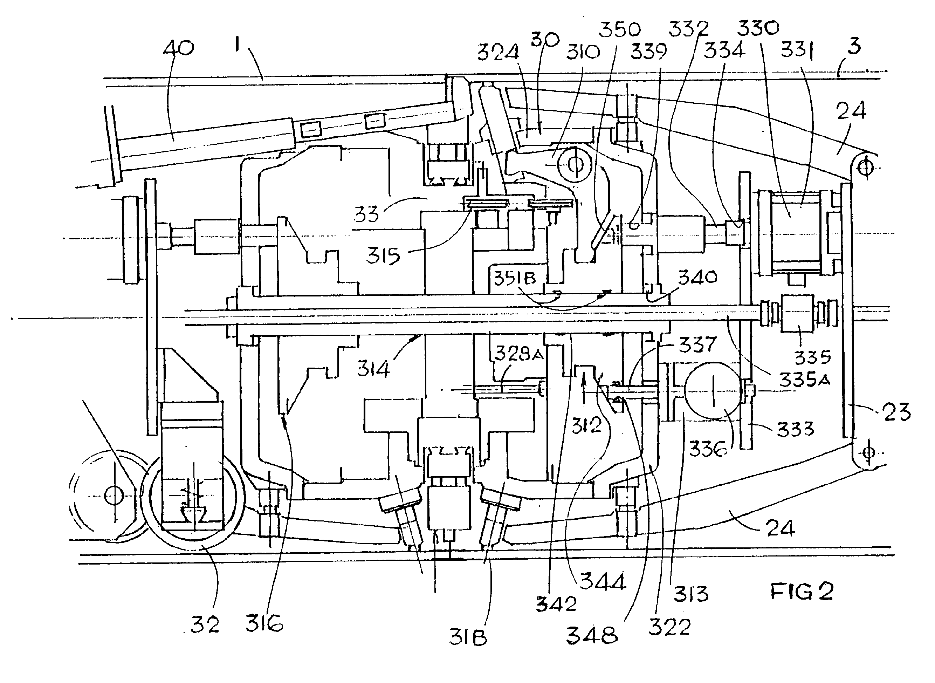

With reference to figures 2 there is shown a thruster assembly 30, the major components of which are a front clamp arrangement 310, a rear clamp arrangement 316, a hub 314, a plurality of cable guide arrangement 315, a ring member 33 and a plurality of guide wheels 32.

Front clamp arrangement 310 includes a plurality of front pipe engaging clamps 31B, an actuating arrangement 312 and a lock arrangement 313.

Rear clamp arrangements 316 is substantially similar to front clamp arrangement 310.

At the front of the thruster assembly 30, three pneumatic actuators 330 (only one shown) are mounted via their respective bodies 331 in a circumferentially equispaced manner on plate 23 of nose cone assembly 20. A plate 333 is secured to the rear-most portion of each actuator body. Plate 333 includes three holes 334 (only one shown) through which a corresponding portion of the actuator ram 332 can pass.

A lock body 336 of a lock arrangement 313 is secured between plate 333 and plate 322.

Plate 322 includes holes through which a lock shaft 337 can pass, holes 339 through which a corresponding portion of an actuator ram can pass, and also a central hole 340 in which is secured hub shaft 342.

Each actuator 330 is a double-acting actuator which can bias the corresponding actuator ram 332 in a forward or rearward direction. Each actuator ram 332 is secured at a rearward end to a thruster collar 344.

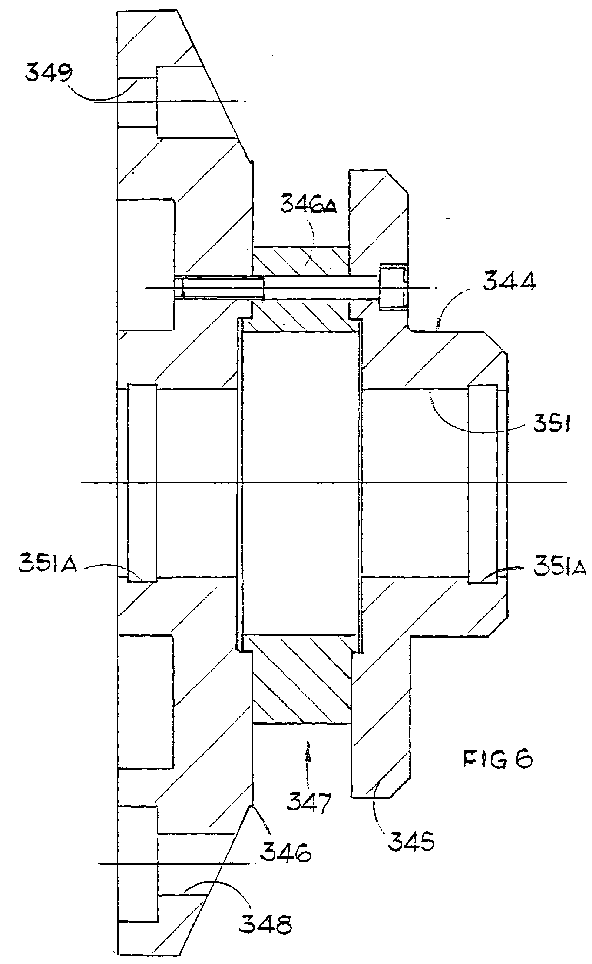

Thruster collar 344 (see figure 6) includes two annular flanges 345 and 346 separated by a spacer 346A to provide an annular recess 347. Flange 346, spacer 346A and flange 345 are all releasably secured together by bolts (not shown). Flange 346 is of larger diameter than flange 345 and includes hole 348 in which one end of lock shaft 337 is secured, and holes 349 (only one shown) in each of which is secured, by bolt 350, a respective end of a corresponding ram 332. Thruster collar 344 also includes a central hole 351 with bush recesses 351A for receiving bushes 351B. Thruster collar 344 is slidably mounted on hub shaft 342.

Plate 322 is secured at circumferentially spaced locations to each guide arm 24 and also at circumferentially spaced locations to annular front clamp support 324B. Front clamp support 324B has a first substantially cylindrical portion 325 with circumferentially spaced lever mounting lugs (not shown) secured thereto, a second pipe engaging clamp guide portion 326, a third cable guide mounting portion 327 and a fourth flange portion 328 which is secured to hub 314 by bolts 328A (only one shown).

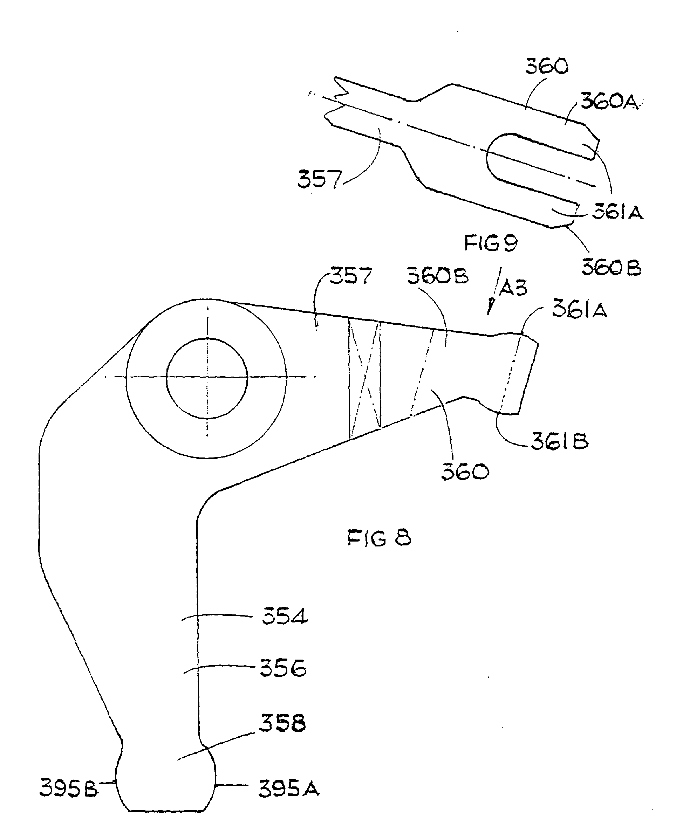

On each pair of lever mounting lugs of the first cylindrical portion 325 there is pivotally mounted, via pivot pin 355, a lever 354 (see figures 8 and 9). Lever 354 is generally of an.L shape and has a first arm 356 and a second forked arm 357. First arm 356 terminates in a thruster collar engaging boss 358 which has two part cylindrical surfaces 359A and 359B. Second forked arm 357 terminates in a pipe clamp engaging fork 360 having prongs 360A and 360B. Each prong includes a part cylindrical surface 361A and 36IB.

In use engaging boss 358 sits between flanges 345 and 346 of thrust collar 344, and each prong 360A and 360B sits in a respective recess 366A and 366B of a pipe clamp 31B (see below).

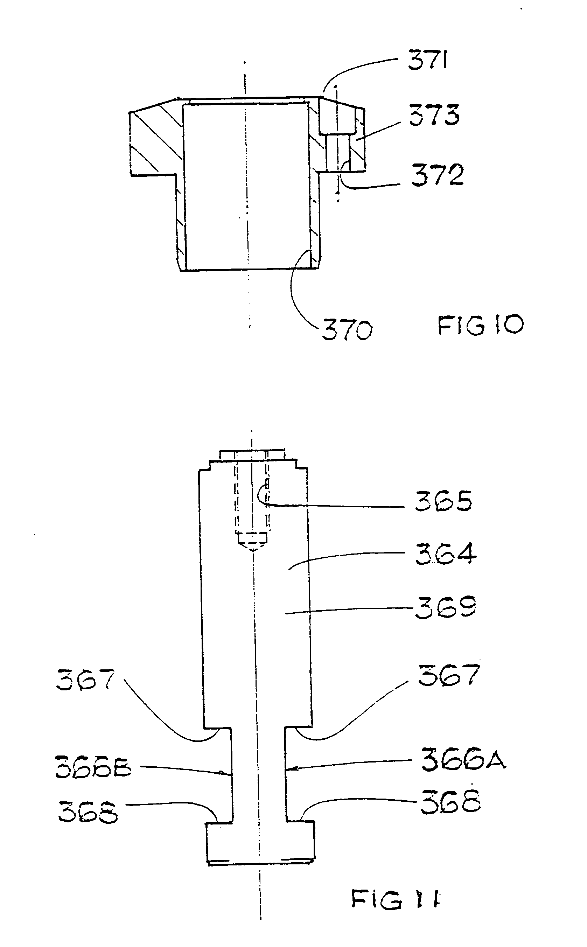

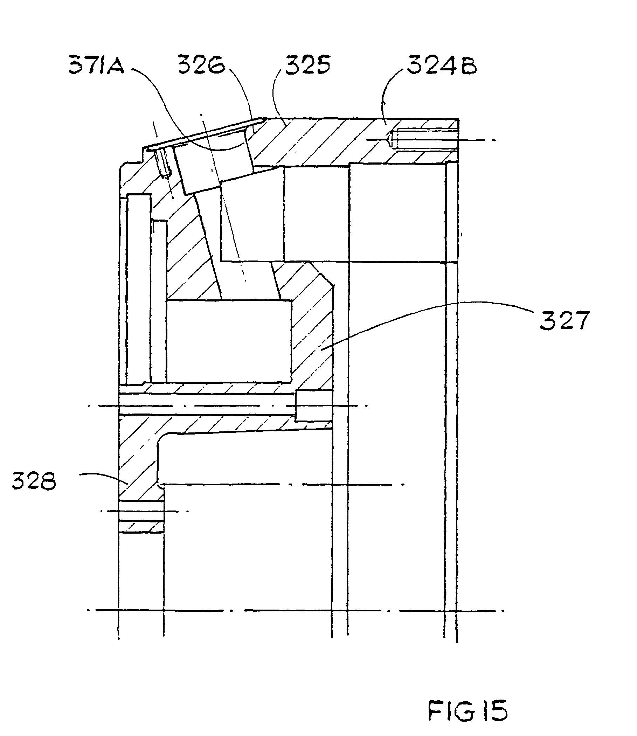

Each pipe engaging clamp 31B (in this case there are 24 pipe engaging clamps 31B) comprises a clamp head 363 secured via a bolt (not shown) to clamp shaft 364 via thread hole 365 (see figure 11). Clamp shaft 364 is generally circular in cross-section but includes fork prong recess 366A and 366B each having engaging abutments 367 and retraction abutments 368. In use a first part 369 of clamp shaft 364 sits within a central hole 370 of housing 371 (see figure 10), which in turn is mounted in holes 371A (see figure 15) in the front clamp support 324, and secured thereto via bolts (not shown) which pass through holes 372 in a flange portion 373 of the housing 371.

Operation of the front clamp arrangement is as follows:

When the clamps are required to clamp the pipe 3, air is admitted into each actuator 330 via manifold 335 and pneumatic line 335A such that the rams 332 on each actuator are caused to move rearward which causes the thruster collar 344 to also move rearward. Because the engaging bosses 358 of each lever 354 are situated in the recess 347 of the thruster collar 344, each lever 354 pivots about its respective pivot pin 355 causing the respective pipe clamp engaging fork 360 to move substantially radially outwards. Since the fork prongs 360A and 360B are situated in respective recesses 366A and 366B of clamp shaft 364, they act on the engaging abutment 367 and force the pipe engaging clamps 31B radially outwards such that each clamp head 363 engages the pipe 3. During such movement of the actuating arrangement 312 the lock shaft 337 moves axially relative to the lock body 336. Once all pipe engaging clamps 31B are fully engaged with the pipe 3 the lock body 336 clamps onto the lock shaft 337 thus preventing release of the clamps in the event of loss of air pressure in one or more of the actuators 330. The lock body is capable of clamping the lock shaft in any relative position, and thus variations in pipe internal diameter can be accommodated by the lock arrangement 313 without requiring adjustment.

It should be noted that each clamp shaft 364 does not move in a truly radial direction but is angled in a rearward direction such that when moving from a disengaged to an engaged position the clamp head 363 whilst moving in a substantially radial direction also moves in a rearward direction towards the joint 6. This helps in ensuring that pipe 3 firmly abuts the end of pipeline 1 prior to welding.

The rear clamp arrangements 316 is arranged similarly to the from clamp arrangement 310 and engagement and disengagement of the rear pipe engaging clamps 31A with the inner wall of the pipe line 1 is substantially as described for the front clamp arrangement.

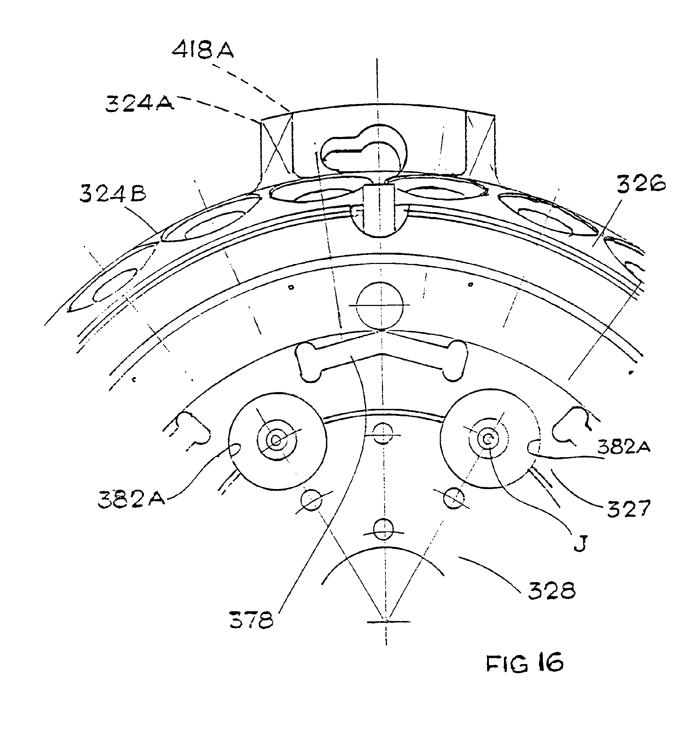

The rear clamp arrangement additionally includes three circumferentially equispaced arrester rod guide lugs 418A shown for convenience in Figure 16.

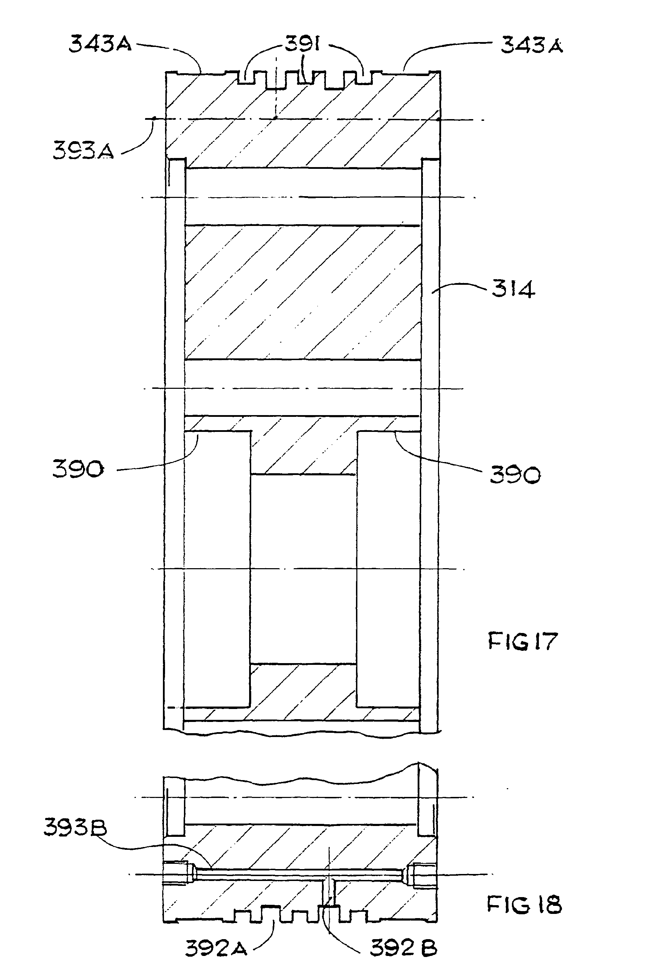

Hub 314 is rotationally and axially releasably secured to hub shaft 342 via radially acting ring clamps with engage the shaft and surfaces 390 of the hub. Hub 314 is generally disc-shaped and has bush recesses 343A to accept bushes 343, gas seal grooves 391 and gas distribution grooves 392A and 392B. Gas distribution groove 392B is connected to gas feed 393B and gas distribution groove 392A is similarly connected to a correspondence gas feed 393 (shown schematically in Figure 17).

Ring member 33 is rotatably mounted on bushes 343 which acts to radially locate ring member 33. Ring member 33 includes track mounting holes 394 on which are mounted arcuate keyways 797, welding current terminal holes 395 in which are mounted welding current terminals, welding assembly control socket hole 396 in which are mounted welded assembly control sockets.

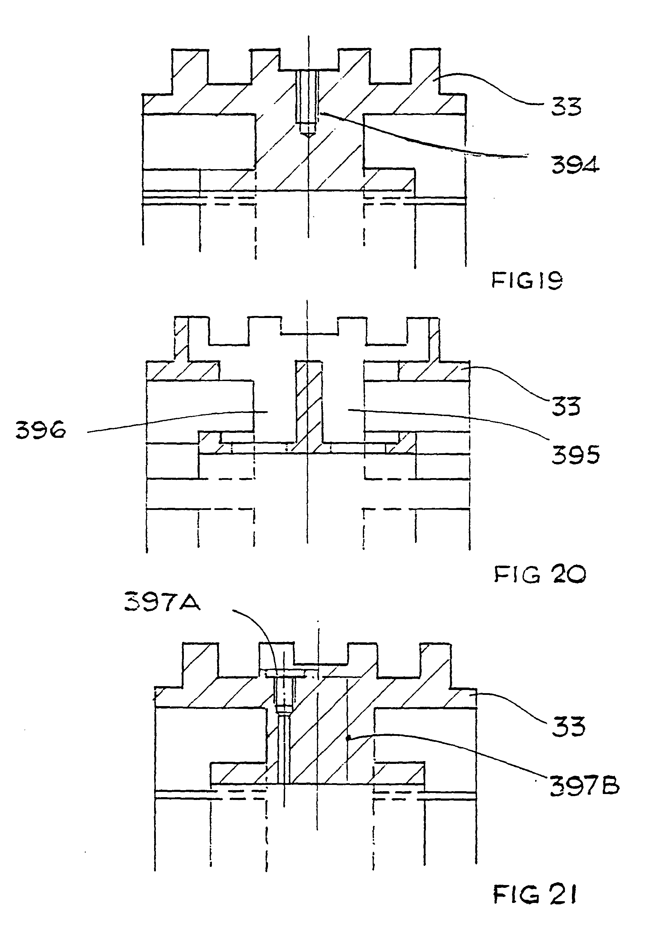

Three ring member gas feed holes 397A are associated with welder assemblies W1,W2 and W3 whilst three further ring member gas feed holes 397B (shown schematically in figure 21) are associated with welder assemblies W4, W5 and W6 respectively (see below).

When assembled gas feed 397A aligns with gas feed 393A and similarly gas feed 397B aligns with gas feed 393B.

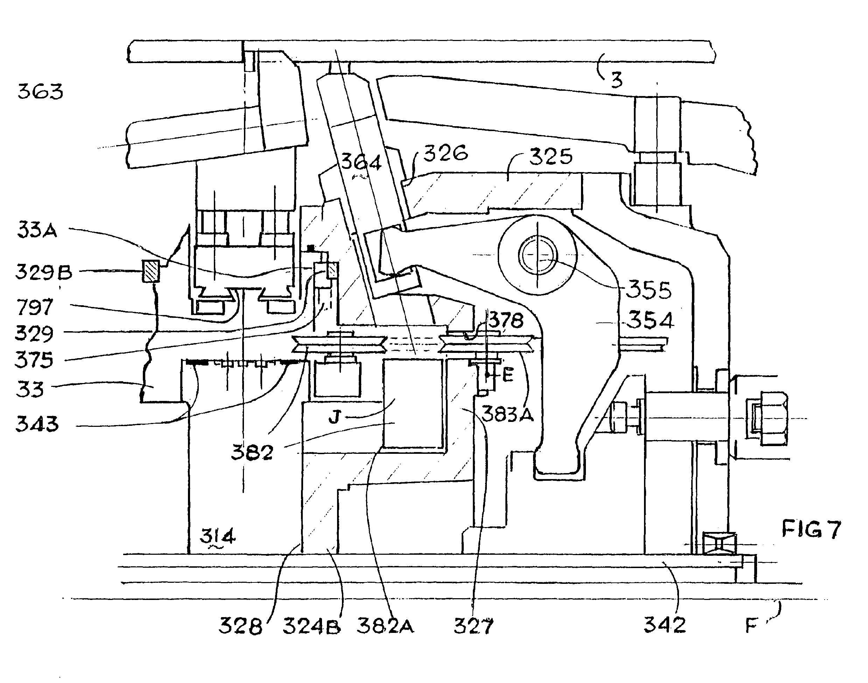

Secured to ring member 33 is an internally toothed ring 33A (see figure 7.)

Gear wheel 375 engages the toothed ring 33A and is secured for drive on a rear-most portion of shaft 376. Shaft 376 is mounted for rotation on front clamp support 324B and is driven by a ring member motor (not shown) having an encoder and being connected to end 377. Thus by starting and stopping the ring member motor as appropriate the ring member can be caused to rotate to any desired location by monitoring the position via the encoder.

Further ring member motors can be arranged to drive the ring member in a similar manner if necessary in the event that only one ring member motor is not powerful enough.

Also secured to ring member 33 is a double-sided ramp 398 against which acts a roller 399A of a rod 399 mounted on front clamp support 324B, and biased towards the ramp 398. Acting against the end of rod 399 remote from roller 399A is a proximity sensor which can determine when roller 399A has reached the top of the double-sided ramp 398. This arrangement thus acts to determine a datum position of the ring member relative to internal pipe welding machine chassis and can be used to established a datum position of the ring member motor encoder.

Bush 329 (see figure 7) is secured to front clamp support 324 and acts axially on toothed ring 33A. A similar bush 329B acts on a rear portion of ring member 33, to secure the ring member 33 axially relative to the internal pipe welding machine.

Bushes 329A and 329B and 343 are all electrically insulating bushes and therefore in the event of a short circuit in the electrical system of the internal pipe welding machine they do not provide a conductive path. This is particularly beneficial in view of the high currents used for welding since no damage occurs to the bearings in the event of a welding current short circuit.

Cable guide arrangements 315 comprises a first cable guide 380 mounted on the ring member 33 a second cable guide 381 mounted on the front clamp support 324 and a third cable guide 382 also mounted on the front clamp support.

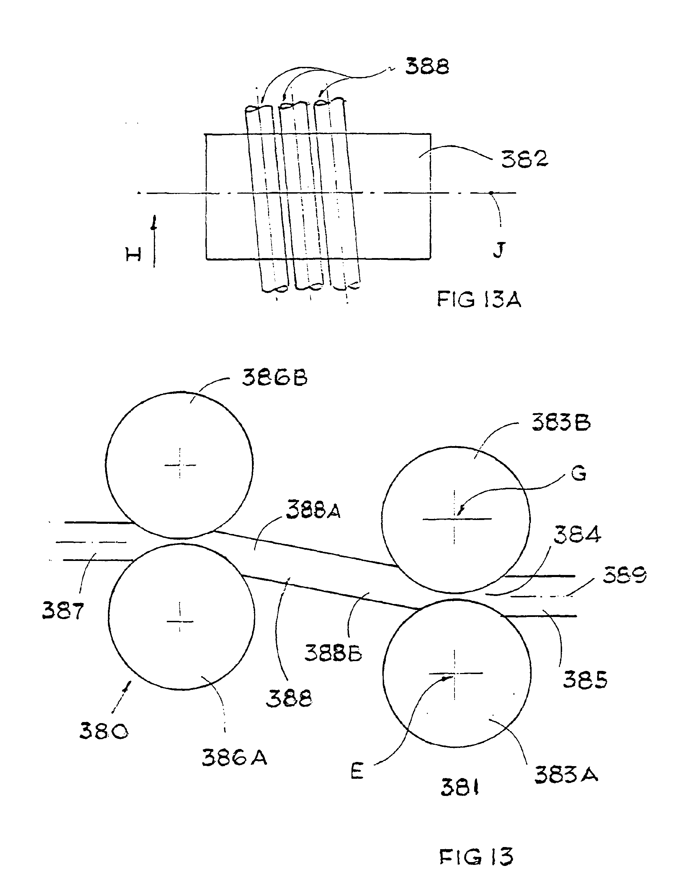

The second cable guide comprises two disc 383A and 383B (see figure 13) each having a V-shaped periphery. The discs 383A is rotatably mounted on the front clamp support 324 in slot 378 (see figure 16) about an axis E which is radially orientated having regard to the pipe line axis F. Disc 383B (obscured by disc 383A in figure 7) is also rotatably mounted on front clamp support 324 about axis G which is also radially orientated. Discs 383A and 383B are arranged such that their peripheries co-operate to form an aperture 384 through which cable 385 can pass.

The first cable guide 380 is similar in arrangement to second cable guide 381 though mounted on ring member 33.

Cable 385 comprises a first portion 387 connected to a corresponding welder assembly via the welding current terminal, a second portion 388 which runs between the first and second cable guides and a third portion 389 connected to a slack tensioner (not shown). When the ring member 33 is in a start position the second cable portion 388 is parallel to pipe line axis F. Rotation of the ring member in a clockwise direction (when viewing from the front of the internal pipe welding machine) causes the first cable guide 380 to move in the direction of arrow H of figure 13 resulting in the cable being pulled through the aperture 384 with the second portion 388 becoming longer at the expense of the third portion 389. Continuing rotation of ring member 33 will cause second cable portion 388 to contact a third cable guide 382.

Third cable guide 382 is in the form of a cylindrical roller situated in recess 382A which can rotate about axis J which is parallel to the pipe line axis F. Continued rotation of ring member 33 will cause the second cable portion 388 to contact successive rollers 382. Thus a particular roller 382 can accommodate more than one cable 385 by supporting cables lying parallel to each other across the roller (see figure 13A). This is because the axial position of part 388A of the second portion 388 of the cable as it leaves the first cable guide is rearward of the axial position of part 388B of the second portion 388 of the cable as it arrives at the second cable guide. It is this relative axial positioning of the first and second cable guides that allows the successive cables to lie as shown in figure 13A.

In further embodiments it is possible to mount the third cable guide for rotation with the welder assemblies.

During movement of the ring member 33 from an extreme clockwise position back to the start position the slack tensioner takes up any slack in the third portion 389 of the cable 385.

The cable guide arrangement 315 allows the ring member 33 to rotate through 360 degrees, in this case 180 degrees clockwise from a start position and 180 degrees anti-clockwise from a start position. The advantage of winding the cable in both a clockwise and anti-clockwise direction is that the slack adjuster only has to take up half the slack, in this case 180° of slack, than if the cable were only wound in one direction wherein they would have to take up more slack, in this case 360° of slack, thus making them more complicated.

A camera (not shown) mounted for rotation with the ring member 33 and aimed at and focused on a pipe joint can be used for post-weld inspection of all of the 360 degree arc of the joint without the requirement of axially moving the internal pipe welding machine.

Where space is limited in the vicinity of the welder assemblies such a camera can be aimed and focused at a portion of the pipe line remote from the joint eg. 100mm behind the joint. Post-weld inspection can then be carried out by moving the internal pipe welding machine forwards by 100mm and then rotating the ring member 33 through 360 degrees. A light source can be provided for the camera either by shining a light down the pipe or by providing a light source on the internal welding machine or preferably providing a light source which is mounted for rotation with the camera.

Preferably a moveable protector can be arranged to cover the camera lens when the camera is not being used post weld inspection to protect the lens from weld spatter. A similar movable protector can protect any light sources which are provided in the vicinity of the welder assemblies and preferably where the camera and light source are provided adjacent to each other a single moveable protector can be provided to protect both the camera and the light source.

As described previously there are six welder assemblies numbered W1-W6 which are positioned at 12 o'clock, 2 o'clock, 4 o'clock, 6 o'clock, 8 o'clock and 10 o'clock respectively when the ring member 33 is in a start position. Welding is carried out whilst each welder assembly is moving downwards, thus welder assemblies W1,W2 and W3 will simultaneously weld a right-hand portion of the joint 6 whilst they are moving from the 12,2 and 4 o'clock positions to the 2,4 and 6 o'clock positions respectively.

During this welding process shield gas is fed through gas feed 393A and is distributed circumferentially around gas distribution groove 392A and passes into the three ring member gas feed holes 397 associated with welder assemblies W1, W2 and W3. Lengths of gas pipe connect the welder torch head of each welder assemblies W1, W2 and W3 with the appropriate gas feed holes 397.

Similarly welder assemblies W4,W5 and W6 will weld a left-hand portion of the joint 6 when moving from an 8 o'clock, 10 o'clock and 12 o'clock position to a 6 o'clock, 8 o'clock and 10 o'clock position respectively whilst gas distribution groove 392B is supplied with welding shield gas from gas feed 393 to provide shield gas at the welding torches of welder assemblies W4, W5 and W6.

Movement of the welders during welding define a weld plane of the internal pipe welding machine which immediately following a welding operation and prior to axial movement of the internal pipe welding machine is clearly coincident with the joint 6.

If during a welding sequence one of the welder assemblies eg. W1 fails to weld its arc of the joint, another welder assembly, in this case W2 or W3 can be used to weld that arc or part of arc welder assembly W1 failed to weld. This is possible because whilst each welder assembly ordinarily only required to weld an arc of 60 degrees (since in this case there are 6 welder assemblies), the fact that the welder assemblies can move through substantially more than 60 degrees allows for this "automatic repair" facility.

**TABLE 1**

| Arc of Joint Normally Welded By | Welder assembly used to "automatically repair" arc (columns shown total rotation capability of welder assemblies) | | |
|---|---|---|---|
| | 360° (±180°) | 180° (+120°to -60°=3x360°÷ N*) | 120°(±60° = 2x360°÷N*) |
| W1 | W2 or W3 | W2 | W2 |
| W2 | W1 or W3 | W1 or W3 | W3 |
| W3 | W1 or W2 | W2 | ---- |
| W4 | W5 or W6 | W5 | W5 |
| W5 | W4 or W6 | W4 or W6 | W6 |
| W6 | W4 or W5 | W5 | ---- |

| | | | |
|---|---|---|---|
| * N = number of welder assemblies = 6 | | | |

## Claims

1. An internal pipe welding machine (10) including at least one welder assembly (50) rotatable relative to a chassis of the internal pipe welding machine for welding a joint between a pipeline and a pipe, **characterised in that** the internal pipe welding machine includes a rotary gas distributor (314) having a rotary member for rotation with the/or each welder assembly and a hub which is stationary relative to the chassis, an arcuate gas distribution groove (392) being positioned in one of the rotary member and hub and being in gas communication with a gas passage (397) in the hub and in gas communication with at least one gas passage in the rotary member, the gas passages and the groove acting to provide gas to the welder assembly during welding.

2. An internal pipe welding machine as defined in claim 1 in which the gas distribution groove (392) is positioned in the hub.

3. An internal pipe welding machine as defined in claim 1 or 2 in which the gas distribution groove (392) is a full circumferential groove.

4. An internal pipe welding machine as defined in any one of claims 1 to 3 in which the rotary member is a ring member (33).

5. An internal pipe welding machine as defined in any preceding claim including a plurality of welders (50) which when in use operate together, and a plurality of corresponding rotary member gas passages (397), one being associated with each welder assembly.

6. An internal pipe welding machine as defined in any preceding claim including at least one first welder assembly (50) and at least one second welder assembly (50) operable independently from the first welder assembly, there being a first rotary gas distributor (314) as defined in any preceding claim associated with the at least one first welder assembly and a second gas distributor (314) as defined in any one preceding claim associated with the at least one second welder assembly.

7. An internal pipe welding machine as defined in any preceding claim wherein the welder assembly is supplied by a slip ring which carries at least one of a welding current and a control signal.

8. An internal pipe welding machine as defined in claim 7 in which the control signal being supplied by the slip ring controls a wire feed speed of the welder assembly or movement of a torch head of the welder assembly between an operating and a retracted position.

## Patentansprüche

1. Innenrohrschweißmaschine (10), die mindestens einen Schweißgerätaufbau (50) enthält, der bezüglich eines Rahmens der Innenrohrschweißmaschine zum Schweißen einer Verbindung zwischen einer Rohrleitung und einem Rohr drehbar ist, **dadurch gekennzeichnet, dass** die Innenrohrschweißmaschine einen Drehgasverteiler (314) mit einem Drehglied zur Drehung mit dem oder jedem Schweißgerätaufbau und einer Nabe, die bezüglich des Rahmens stationär ist, aufweist, wobei eine bogenförmige Gasverteilnut (392) im Drehglied oder in der Nabe positioniert ist und mit einem Gaskanal (397) in der Nabe und mit mindestens einem Gaskanal im Drehglied in Gasverbindung steht, wobei die Gaskanäle und die Nut zur Zuführung von Gas zum Schweißgerätaufbau während des Schweißens wirken.

2. Innenrohrschweißmaschine nach Anspruch 1, bei der die Gasverteilnut (392) in der Nabe positioniert ist.

3. Innenrohrschweißmaschine nach Anspruch 1 oder 2, bei der die Gasverteilnut (392) eine um den ganzen Umfang herum verlaufende Nut ist.

4. Innenrohrschweißmaschine nach einem der Ansprüche 1 bis 3, bei der das Drehglied ein Ringglied (33) ist.

5. Innenrohrschweißmaschine nach einem der vorhergehenden Ansprüche, die mehrere Schweißgeräte (50), die im Gebrauch zusammen betrieben werden, und mehrere entsprechende Drehgliedgaskanäle (397) enthält, von denen jeweils einer jedem Schweißgerätaufbau zugeordnet ist.

6. Innenrohrschweißmaschine nach einem der vorhergehenden Ansprüche, die mindestens einen ersten Schweißgerätaufbau (50) und mindestens einen zweiten Schweißgerätaufbau (50), der unabhängig von dem ersten Schweißgerätaufbau betrieben werden kann, enthält, wobei ein erster Drehgasverteiler (314) nach einem der vorhergehenden Ansprüche dem mindestens einen ersten Schweißgerätaufbau zugeordnet ist und ein zweiter Gasverteiler (314) nach einem der vorhergehenden Ansprüche dem mindestens einen zweiten Schweißgerätaufbau zugeordnet ist.

7. Innenrohrschweißmaschine nach einem der vorhergehenden Ansprüche, wobei der Schweißgerätaufbau durch einen Schleifring versorgt wird, der einen Schweißstrom und/oder ein Steuersignal befördert.

8. Innenrohrschweißmaschine nach Anspruch 7, bei der das durch den Schleifring zugeführte Steuersignal eine Drahtzufuhrgeschwindigkeit des Schweißgerätaufbaus oder eine Bewegung eines Brennerkopfes des Schweißgerätaufbaus zwischen einer Betriebs- und einer zurückgezogenen Position steuert.

## Revendications

1. Soudeuse (10) intérieure de tubes comprenant au moins un ensemble soudeur (50) susceptible de tourner par rapport à un châssis de la soudeuse intérieure de tubes afin de réaliser un cordon de soudure entre un pipeline et un tube, **caractérisée en ce que** la soudeuse intérieure de tubes comprend un distributeur rotatif (314) de gaz doté d'un organe rotatif destiné à tourner avec l'ensemble / chacun des ensembles soudeurs et un moyeu immobile par rapport au châssis, une gorge arquée (392) de répartition de gaz étant positionnée dans l'organe rotatif ou le moyeu et étant en communication d'écoulement de gaz avec un passage (397) de gaz dans le moyeu et en communication d'écoulement de gaz avec au moins un passage de gaz dans l'organe rotatif, les passages de gaz et la gorge agissant pour fournir du gaz à l'ensemble soudeur pendant le soudage.

2. Soudeuse intérieure de tubes telle que définie dans la revendication 1, dans laquelle la gorge (392) de répartition de gaz est positionnée dans le moyeu.

3. Soudeuse intérieure de tubes telle que définie dans la revendication 1 ou 2, dans laquelle la gorge (392) de répartition de gaz est une gorge circonférentielle complète.

4. Soudeuse intérieure de tubes telle que définie dans l'une quelconque des revendications 1 à 3, dans laquelle l'organe rotatif est un organe annulaire (33).

5. Soudeuse intérieure de tubes telle que définie dans l'une quelconque des revendications précédentes, comprenant une pluralité d'ensembles soudeurs (50) fonctionnant ensemble pendant l'utilisation et une pluralité de passages (397) de gaz correspondants dans l'organe rotatif, associés chacun à un ensemble soudeur.

6. Soudeuse intérieure de tubes telle que définie dans l'une quelconque des revendications précédentes, comprenant au moins un premier ensemble soudeur (50) et au moins un deuxième ensemble soudeur (50) susceptible de fonctionner indépendamment du premier ensemble soudeur, un premier distributeur rotatif (314) de gaz tel que défini dans l'une quelconque des revendications précédentes étant associé audit ou auxdits premiers ensembles soudeurs et un deuxième distributeur (314) de gaz tel que défini dans l'une quelconque des revendications précédentes étant associé audit ou auxdits deuxièmes ensembles soudeurs.

7. Soudeuse intérieure de tubes telle que définie dans l'une quelconque des revendications, dans laquelle l'ensemble soudeur est alimenté par une bague de collecteur acheminant un courant de soudage et / ou un signal de commande.

8. Soudeuse intérieure de tubes telle que définie dans la revendication 7, dans laquelle le signal de commande acheminé par la bague de collecteur commande une vitesse d'avance du fil de l'ensemble soudeur ou le mouvement d'une tête de torche de l'ensemble soudeur entre une position de fonctionnement et une position rétractée.
